# EUROPÄISCHE PATENTANMELDUNG

(11) **EP 4 670 492 A1**
(43) Veröffentlichungstag der Anmeldung: **31.12.2025**
(21) Anmeldenummer: 25186205.8
(22) Anmeldetag: 30.06.2025
(51) Int. Cl.: A01G 3/04, A01G 7/06, A01G 17/02, A01G 20/30

(54) **VORRICHTUNG ZUR PFLANZENBEARBEITUNG UND VERFAHREN ZUR STEUERUNG DERSELBEN**

(30) Priorität: 30.06.2024 DE 102024118479
(71) Anmelder: ERO GmbH, 55469 Simmern (DE)
(72) Erfinder: Wendling, Ignatz, 55590 Meisenheim am Glan (DE); Lieb, Matthias, 55559 Bretzenheim (DE)
(74) Vertreter: Ipsilon

(57) **Zusammenfassung**

Die Erfindung betrifft eine Vorrichtung (100) zur vorbeifahrenden Bearbeitung von Pflanzen, umfasst eine zur optischen Erkennung von Vitalitätsparametern und/oder von Schädlingsbefall an einer Pflanze eingerichtete Erkennungseinheit (110), eine der Erkennungseinheit in Vorbeifahrtrichtung nachgelagerte Bearbeitungseinheit (120) und eine Steuereinheit (130). Der Steuereinheit (130) sind zumindest Signale der Erkennungseinheit (110) zugeführt. Die Steuereinheit (130) ist zur Ausgabe von Steuersignalen (S) an die Bearbeitungseinheit (120) eingerichtet, mittels welcher die Bearbeitungseinheit (120) zur Anpassung der Bearbeitung von Pflanzen mit von Sollwerten abweichenden Vitalitätsparametern und/oder von durch Schädlinge befallenen Pflanzen ansteuerbar ist.

## Beschreibung

### FELD DER ERFINDUNG

Die vorliegende Erfindung betrifft Vorrichtung zur Pflanzenbearbeitung und ein Verfahren zur Steuerung derselben, insbesondere für die Bearbeitung von Pflanzen in Reihenkulturen.

### HINTERGRUND

Für die Kultivierung und Bearbeitung von Pflanzen in Reihenkulturen, wie etwa beim Weinanbau, beim Obst-, Hopfen- und Gemüseanbau, werden zur effizienten Bewirtschaftung Pflanzenbearbeitungseinrichtungen benötigt, die üblicherweise an einem landwirtschaftlichen Fahrzeug befestigt oder in dieses integriert sind. Die Bearbeitung von Pflanzen in Reihenkulturen kann u.a. die Entlaubung bzw. den Pflanzen- oder Laubschnitt, aber auch die Ernte umfassen.

Bei der Bearbeitung dieser Reihenkulturen, insbesondere beim Weinanbau, hat ein effizienter Maschineneinsatz und eine hohe Qualität der geernteten Früchte hohe Priorität, ebenso wie eine hohe Erntemenge. Ein effizienter Maschineneinsatz kann bspw. durch eine hohe Fahrgeschwindigkeit und/oder durch gleichzeitiges Bearbeiten zweier Seiten einer oder mehrerer Pflanzenreihen erreicht werden. Die geforderte hohe Qualität der geernteten Früchte kann bspw. dadurch erreicht werden, dass schadhafte oder von Schädlingen befallene Pflanzen oder Früchte von der Bearbeitung bzw. der Ernte ausgespart werden.

Es ist daher eine Aufgabe der vorliegenden Erfindung, eine Vorrichtung und ein Verfahren zu deren Steuerung vorzuschlagen, um während der Bearbeitung oder Ernte von Schädlingen befallene Pflanzen zu erkennen und diese von der Bearbeitung oder Ernte auszusparen und ggf. weitere Maßnahmen zu einem späteren Zeitpunkt zu ergreifen.

### BESCHREIBUNG DER ERFINDUNG

Diese Aufgabe wird durch die in Anspruch 1 angegebene Vorrichtung und das in Anspruch 8 angegebene Verfahren gelöst. Vorteilhafte Ausgestaltungen und Weiterentwicklungen sind in den jeweiligen abhängigen Ansprüchen angegeben.

Die Erfindung wird im Folgenden am Beispiel der Pilzerkrankung Esca von Weinreben beschrieben. Bei der Esca-Krankheit handelt es sich um eine komplexe Abbaukrankheit von Weinreben, die in den letzten drei Jahrzehnten weltweit stark zugenommen hat. Sie ist eine der gefährlichsten Rebholzkrankheiten, die von verschiedenen holzzersetzenden Pilzen verursacht wird und zum Absterben der Rebstöcke führen kann. Seit den 1990er Jahren verbreitet sich die Esca-Krankheit zunehmend in den nördlichen Weinbauregionen.

Bei einem Befall durch Esca treten zwischen den Blattadern älterer Blätter unregelmäßig verteilte, gelbliche Flecken auf, die von der Mitte aus nekrotisieren. Die Nekrosen gehen ineinander über und breiten sich flächig zwischen den Blattadern aus. Die Blattadern bleiben dabei von einer hellgrünen, gelblichen Zone umgeben, die Nekrosen sind rötlichbraun gefärbt und werden auch als "Tigerstreifen" oder "Tigermuster" bezeichnet. Die Weinbeeren der betroffenen Rebstöcke bleiben kleinbeerig, die einzelnen Beeren entwickeln während des Sommers auf der Beerenhaut braune, später auch schwarze, unregelmäßige Flecken. Häufig tritt in der Anfangsphase aus Schnittflächen des Holzes eine gummiartige, dunkle Substanz aus. Vom Pilz befallenes Holzgewebe ist weißlich, schwammig, trocken und durch eine schmale, braun bis schwarz gefärbte Zone abgegrenzt. Die Rebstöcke sterben häufig innerhalb kurzer Zeit ab. Blatt- und Beerensymptome können unabhängig voneinander auftreten.

Esca verbreitet sich vor allem durch Schnittstellen und Wunden, weshalb die Aussparung der befallenen Pflanzen bei der Bearbeitung die Ausbreitung des Befalls effektiv verhindern kann, insbesondere bei der schneidenden Bearbeitung. Je mehr geschnitten wird und je häufiger mehrjähriges Holz verletzt wird, desto stärker muss mit dem Auftreten dieser Krankheit gerechnet werden.

Erkrankte Rebstöcke werden während der Vegetationszeit gekennzeichnet, um diese beim Winterschnitt zu erkennen. Rechtzeitiges Entfernen erkrankter Stockteile mit nachfolgendem Stockneuaufbau (Hochziehen von unten) bringt selten symptomfreie Stöcke. Stocküberlastungen sollen vermieden werden. Stress (hohe Erträge, Wasserstress u. a.) führt auf Dauer zu mehr Stockausfällen durch Esca.

Gemäß einem ersten Aspekt der Erfindung wird eine Vorrichtung zur vorbeifahrenden Bearbeitung von Pflanzen vorgeschlagen, die dazu eingerichtet ist, während der Bearbeitung oder Ernte Vitalitätsparameter von Pflanzen und/oder von Schädlingen befallene Pflanzen zu erkennen und diese von der Bearbeitung oder Ernte auszusparen und/oder ggf. weitere Maßnahmen zu ergreifen. Die Vorrichtung umfasst eine zur optischen Erkennung von Vitalitätsparametern und/oder von Schädlingsbefall an einer Pflanze eingerichtete Erkennungseinheit, eine der Erkennungseinheit in Fahrtrichtung nachgelagerte Bearbeitungseinheit und eine Steuereinheit. Der Steuereinheit, welche zur Ausgabe von Steuersignalen an die Bearbeitungseinheit eingerichtet ist, mittels welcher die Bearbeitungseinheit zur Anpassung der Bearbeitung von Pflanzen mit von Sollwerten abweichenden Vitalitätsparametern und/oder von durch Schädlinge befallenen Pflanzen ansteuerbar ist, sind zumindest Signale der Erkennungseinheit und/oder einer mit dieser verbundenen Analyseeinheit zugeführt.

Die Aussparung der schadhaften oder von Schädlingen befallenen Früchte von der Ernte resultiert unmittelbar in einer hohen Qualität der geernteten Früchte. Eine hohe Erntemenge, die von sehr vielen, zum Teil nicht oder nur wenig beeinflussbaren Parametern abhängen kann, bedingt auf jeden Fall einen gesunden Pflanzenbestand. Dieser kann durch das Aussparen von Pflanzen mit Schädlingsbefall bei der Bearbeitung beeinflusst werden. Zwar kann auf diese Weise eine befallene Pflanze nicht notwendigerweise von Schädlingen befreit werden, jedoch kann die Ausbreitung des Schädlings erschwert oder sogar verhindert werden.

Bei einer oder mehreren Ausgestaltungen der Vorrichtung umfasst die Erkennungseinheit eine zur kontinuierlichen Aufnahme von Bildern von Laub und/oder Früchten der zu bearbeitenden Pflanzen bei mehreren Wellenlängen eingerichtete Multispektralkamera. Die Multispektralkamera ist außerdem dazu eingerichtet, die aufgenommenen Bilder einer der Erkennungseinheit zugeordneten Analyseeinheit zur Erkennung von Vitalitätsparametern und/oder von Schädlingsbefall zuzuführen. Die Multispektralkamera ist vorzugsweise so ausgerichtet, dass die Pflanze von der Seite erfasst, wird. Es können Wellenlängen im für Menschen sichtbaren Spektrum erfasst werden, aber auch die Erfassung im ultravioletten und/oder infraroten Spektrum ist denkbar. Die Analyseeinheit kann lokal an der Vorrichtung oder von dieser entfernt angeordnet sein. In letzterem Fall ist eine Kommunikationseinheit vorgesehen, bspw. eine Mobilfunkschnittstelle oder eine WLAN-Schnittstelle.

Zweckmäßigerweise kann bei einer oder mehreren Ausgestaltungen der Vorrichtung der Steuereinheit außerdem Information über die Fahrgeschwindigkeit eines die Vorrichtung tragenden Fahrzeugs zugeführt sein.

Bei einer oder mehreren Ausgestaltungen umfasst die Vorrichtung außerdem eine Lokalisierungseinheit zur Bestimmung einer absoluten Geoposition und/oder einer relativen Position innerhalb eines die zu bearbeitenden Pflanzen enthaltenden Bereichs oder Areals. Die Lokalisierungseinheit kann bspw. eine Einheit zur Bestimmung der absoluten Geoposition mittels Signalen von entsprechenden Satelliten, wie etwa GPS, GLONASS, BEIDOU, GALILEO, und/oder zugehörigen erdgebundenen Hilfssendern umfassen. Die Hilfssender können die Genauigkeit der satellitenbasierten Bestimmung der Geoposition bis auf eine Restabweichung von wenigen Zentimetern verbessern. Alternativ oder zusätzlich kann die Vorrichtung zur Erfassung von stationären, dauerhaft innerhalb des die zu bearbeitenden Pflanzen enthaltenden Bereichs oder Areals angeordneten Merkmalen eingerichtet sein. Diese Merkmale können bspw. Rankhilfen oder dergleichen sein. Im Weinbau werden bspw. die Reben in den Reihen durch Spanndrähte gehalten. Die Spanndrähte sind zwischen im Boden fest verankerten, sogenannten Stickeln gespannt, die in gleichen Abständen innerhalb einer Reihe stehen. Die Stickel, wie auch die Stöcke oder Stämme der Pflanzen, welche ebenfalls in gleichen Abständen innerhalb einer Pflanzenreihe stehen, können optisch und/oder mechanisch erfasst werden, bspw. mittels einer Kamera oder von Tastern. Durch Abzählen der bei der Durchfahrt durch eine Pflanzenreihe erkannten Stickel und/oder Stöcke ist eine sehr genaue relative Position der jeweiligen Pflanze bestimmbar.

Bei einer oder mehreren Ausgestaltungen umfasst die Vorrichtung außerdem eine Markierungseinheit, die dazu eingerichtet ist, eine Pflanze mit von Sollwerten abweichenden Vitalitätsparametern und/oder eine durch Schädlinge befallene Pflanze optisch erkennbar vor Ort und/oder virtuell auf einer Karte mit Geoinformationen zu markieren. Die Markierung kann bspw. durch Aufbringen einer Farbmarkierung auf den Stock der Pflanze oder eines oder zweier benachbarter Stickel erfolgen. Eine virtuelle Markierung kann die absolute Geoposition oder eine relative Position umfassen. Bspw. kann eine Angabe die fortlaufende Nummer eines Stocks oder Stickels in einer Reihe umfassen. Letzteres ist besonders einfach auch ohne Hilfsmittel nutzbar, z.B. wenn eine erkrankte Pflanze zu einem späteren Zeitpunkt manuell nachbearbeitet oder behandelt wird. Die Markierungseinheit kann, wie die Bearbeitungseinheit, von der Steuereinheit mittels entsprechender Signale angesteuert sein.

Die Nutzung der Markierung einer Pflanze mit von Sollwerten abweichenden Vitalitätsparametern und/oder einer erkrankten Pflanze zu einem späteren Zeitpunkt kann bspw. das Aussetzen der Ernte an von Schädlingen befallenen Pflanzen umfassen, bei der Weinlese bspw. durch Abschalten eines Rüttelwerks an einem Vollernter.

Bei einer oder mehreren Ausgestaltungen der Vorrichtung ist die Bearbeitungseinheit mittels Aktuatoren in Bezug auf die Pflanze positionierbar. Die Anpassung der Bearbeitung in Übereinstimmung mit von der Steuereinheit ausgegebenen Steuersignalen kann in diesem Fall das Distanzieren der Bearbeitungseinheit von einer von Schädlingen befallenen Pflanze umfassen. So kann bspw. eine Entlaubung einer erkrankten Pflanze ausgesetzt werden, um eine Verbreitung des Krankheitserregers über das Werkzeug oder das Laub zu verhindern. Alternativ kann mit demselben Ziel die Bearbeitungseinheit abgeschaltet werden, wenn eine Pflanze mit von Sollwerten abweichenden Vitalitätsparametern und/oder eine von Schädlingen befallenen Pflanze in einen Wirkungsbereich der Bearbeitungseinheit kommt.

Bei einer oder mehreren Ausgestaltungen umfasst die Vorrichtung außerdem eine Behandlungseinheit, die dazu eingerichtet ist, einer Pflanze mit von Sollwerten abweichenden Vitalitätsparametern Nährstoffe zuzuführen und/oder eines von mehreren oder mehrere Schädlingsbekämpfungsmittel auf eine durch Schädlinge befallene Pflanze auszubringen. Vitalitätsparameter können u.a. einen von Sollwerten abweichenden Magnesiumgehalt umfassen, der ausschließlich an der belaubten Pflanze erkennbar ist. Ein Zuführen von Magnesium erfolgt jedoch zweckmäßigerweise im Winter. Die Erkennung von Vitalitätsparametern kann das Erfassen des Verhältnisses von Blatt- zu Fruchtanteil umfassen.

Gemäß einem zweiten Aspekt der Erfindung wird ein Verfahren zur vorbeifahrenden Bearbeitung von Pflanzen mittels Ausgestaltungen einer Vorrichtung gemäß dem ersten Aspekt der Erfindung vorgeschlagen. Das Verfahren umfasst das Vorbeibewegen der Vorrichtung an einer oder mehreren Pflanzen, das Erfassen einer jeweils an einer Erkennungseinheit vorbeiziehenden Pflanze, das Erkennen von Sollwerten abweichenden Vitalitätsparametern und/oder von Schädlingsbefall an der jeweiligen Pflanze, und das Ausgeben von Steuersignalen an eine Bearbeitungseinheit, um die Bearbeitung der Pflanze durch diese an von Sollwerten abweichende Vitalitätsparameter und/oder Schädlingsbefall anzupassen.

Das Anpassen der Bearbeitung von durch Schädlinge befallenen Pflanzen kann u.a. das Aussetzen der Bearbeitung, das Markieren befallener Pflanzen, das Ausbringen von Schädlingsbekämpfungsmitteln auf befallene Pflanzen, das Ausbringen von Nährstoffen und/oder das Roden befallener Pflanzen umfassen.

Bei einer oder mehreren Ausgestaltungen des Verfahrens umfasst das Erkennen von Sollwerten abweichenden Vitalitätsparametern und/oder von Schädlingsbefall an der jeweiligen Pflanze das Zuführen von mittels einer Multispektralkamera der Erkennungseinheit aufgenommenen Bildern zu einer Analyseeinheit.

Bei einer oder mehreren Ausgestaltungen umfasst das Verfahren außerdem das Bestimmen einer absoluten Geoposition und/oder einer relativen Position innerhalb eines die zu bearbeitenden Pflanzen enthaltenden Bereichs oder Areals. Das Erfassen der Geoposition absoluten Geoposition und/oder der relativen Position kann kontinuierlich erfolgen oder von der Erkennung einer Pflanze mit von Sollwerten abweichende Vitalitätsparameter und/oder Schädlingsbefall getriggert werden.

Bei einer oder mehreren Ausgestaltungen umfasst das Verfahren außerdem das Markieren, optisch erkennbar vor Ort und/oder virtuell auf einer Karte mit Geoinformationen, einer Pflanze mit von Sollwerten abweichenden Vitalitätsparametern und/oder einer durch Schädlinge befallene Pflanze.

Während die Vorrichtung und das Verfahren vorstehend mit Bezugnahme auf das Beispiel einer Esca-Erkrankung beschreiben wurde ist für den Fachmann klar, dass die Erfindung auch bei anderen Krankheiten anwendbar ist, welche ein optisch erkennbares Krankheitsbild ausbilden, einschließlich, aber nicht begrenzt auf echten und falschen Mehltau sowie die Schwarzholzkrankheit.

Die vorstehend beschriebene Vorrichtung und das entsprechende Verfahren ermöglichen es in vorteilhafter Weise, Vitalitätsparameter einer Pflanze oder einen Schädlingsbefall schnell zu erkennen und ggf. sofort Maßnahmen zu ergreifen, um die Ausbreitung des Schädlings zu verhindern oder zu erschweren, oder um den Schädling mit biologischen Maßnahmen zu bekämpfen. Die ebenfalls mögliche unmittelbare Anpassung einer Bearbeitung an vorgefundene Vitalitätsparameter oder einen Schädlingsbefall ist ein weiterer Vorteil. Durch die Anpassung kann u.a. ein qualitativ besseres Ernteergebnis erzielt werden. Die Markierung von Pflanzen, die von einem Sollwert oder einem Sollbereich abweichende Vitalitätsparameter oder einen Schädlingsbefall aufweisen ermöglicht es, geeignete Maßnahmen zu einem günstigen späteren Zeitpunkt gezielt vorzunehmen, bspw. wenn eine sofortige Maßnahme nicht ergriffen werden kann oder Maßnahmen zu einem späteren Zeitpunkt zu einem besseren Ergebnis führen.

### KURZE BESCHREIBUNG DER ZEICHNUNG

Im Folgenden wird die Erfindung mit Bezug auf die Zeichnung näher erläutert. In der Zeichnung zeigt
- Fig. 1: ein schematisches Blockdiagramm einer exemplarischen Ausführung der erfindungsgemäßen Vorrichtung, und
- Fig. 2: ein Flussdiagramm einer exemplarischen Ausführung des erfindungsgemäßen Verfahrens.

### BESCHREIBUNG VON AUSFÜHRUNGSBEISPIELEN

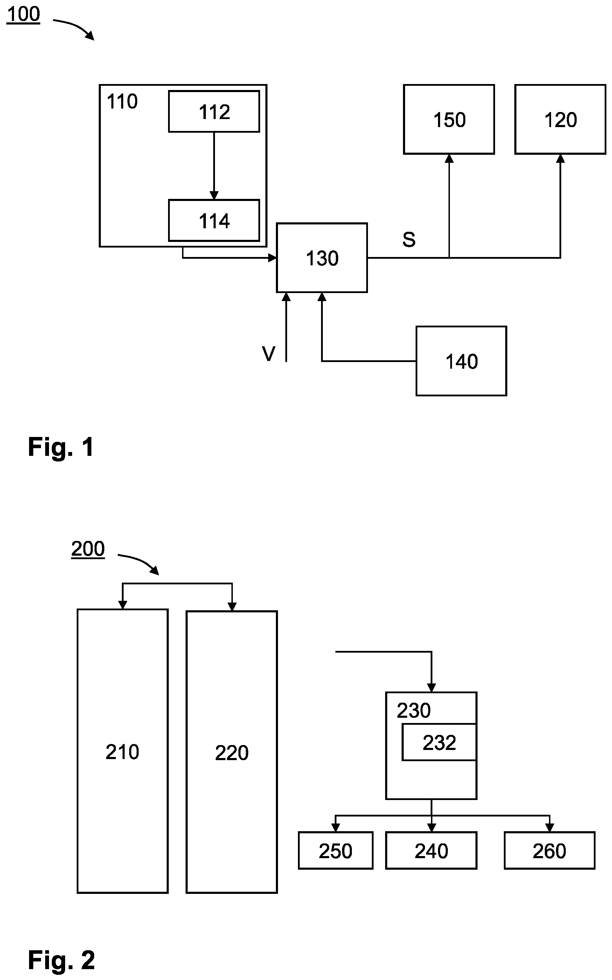

Figur 1 zeigt schematisches Blockdiagramm einer exemplarischen Ausführung der erfindungsgemäßen Vorrichtung 100. Eine zur optischen Erkennung von Vitalitätsparametern und/oder von Schädlingsbefall an einer Pflanze eingerichtete Erkennungseinheit 110 ist mit einer Steuereinheit 130 kommunikativ verbunden. Die Erkennungseinheit 110 umfasst eine Multispektralkamera 112, deren Bilder einer Auswerteeinheit 114 zugeführt sind. Zweckmäßigerweise sind die Ausgangssignale der Auswerteinheit 114 der Steuereinheit zugeführt. Der Steuereinheit sind außerdem Informationen über die Fahrgeschwindigkeit V eines die Vorrichtung tragenden Fahrzeugs zugeführt. So kann der Abstand zwischen der Erkennungseinheit 110 und einer Bearbeitungseinheit 120 bzw. einer Markierungseinheit 150 berücksichtigt werden, wenn diese nach der Erkennung von von Sollwerten abweichenden Vitalitätsparametern und/oder von Schädlingsbefall an einer Pflanze von der Steuereinheit 130 angesteuert werden. Die Steuereinheit 130 gibt dazu Steuersignale S an die Bearbeitungseinheit 120 bzw. Markierungseinheit 150 aus. Eine Lokalisierungseinheit 140 ist ebenfalls mit der Steuereinheit 130 verbunden, um dieser Informationen über eine absolute Geoposition oder eine relative Position innerhalb eines die zu bearbeitenden Pflanzen enthaltenden Bereichs oder Areals zuzuführen. Die Zuführung der absoluten Geoposition oder der relativen Position ist insbesondere nach der Erkennung von von Sollwerten abweichenden Vitalitätsparametern und/oder von Schädlingsbefall an einer Pflanze zweckmäßig, wenn von der Vorrichtung eine virtuelle Karte des die zu bearbeitenden Pflanzen enthaltenden Bereichs oder Areals erstellt wird, in welcher Pflanzen mit von Sollwerten abweichenden Vitalitätsparametern und/oder Schädlingsbefall wiederauffindbar gekennzeichnet werden sollen.

Figur 2 zeigt ein Flussdiagramm einer exemplarischen Ausführung des erfindungsgemäßen Verfahrens 200. In Schritt 210 wird die Vorrichtung an einer oder mehreren Pflanzen vorbeibewegt. Dieser Schritt erfolgt kontinuierlich während des gesamten Verfahrens, was durch die Erstreckung der den Schritt 210 darstellenden Box parallel zu allen weiteren Verfahrensschritten dargestellt ist. In Schritt 220 werden an der Erkennungseinheit 110 aufgrund der Vorbeibewegung vorbeiziehende Pflanzen erfasst. Auch dieser Schritt erfolgt kontinuierlich während des gesamten Verfahrens, was ebenfalls durch die Erstreckung der den Schritt 220 darstellenden Box parallel zu allen weiteren Verfahrensschritten dargestellt ist. In Schritt 230 werden von Sollwerten abweichende Vitalitätsparametern und/oder ein Schädlingsbefall an der jeweils gerade erfassten Pflanze erkannt. Die Erkennung umfasst das Zuführen von mittels einer Multispektralkamera 112 der Erkennungseinheit 110 aufgenommenen Bildern zu einer Analyseeinheit 114 in Schritt 232. In Schritt 240 werden Steuersignale S an eine Bearbeitungseinheit 120 ausgegeben, um die Bearbeitung der Pflanze durch diese an von Sollwerten abweichende Vitalitätsparameter und/oder Schädlingsbefall anzupassen. Alternativ oder zusätzlich werden in Schritt 260 Steuersignale S an eine Markierungseinheit 150 ausgegeben, um die Pflanze mit von Sollwerten abweichenden Vitalitätsparametern und/oder Schädlingsbefall zu markieren. Ebenfalls alternativ oder zusätzlich kann in Schritt 250 die absolute Geoposition und/oder die relative Position innerhalb eines die zu bearbeitenden Pflanzen enthaltenden Bereichs oder Areals bestimmt werden. Die Bestimmung der absoluten Geoposition und/oder der relativen Position innerhalb eines die zu bearbeitenden Pflanzen enthaltenden Bereichs oder Areals kann auch kontinuierlich während der gesamten Ausführung des Verfahrens erfolgen (nicht in der Figur dargestellt).

## Patentansprüche

1. Vorrichtung (100) zur vorbeifahrenden oder überfahrenden Bearbeitung von Pflanzen, umfassend eine zur optischen Erkennung von Vitalitätsparametern und/oder von Schädlingsbefall an einer Pflanze eingerichtete Erkennungseinheit (110), eine der Erkennungseinheit in Fahrtrichtung der Vorrichtung nachgelagerte Bearbeitungseinheit (120) und eine Steuereinheit (130), welcher zumindest Signale der Erkennungseinheit (110) zugeführt sind und welche zur Ausgabe von Steuersignalen (S) an die Bearbeitungseinheit (120) eingerichtet ist, mittels welcher die Bearbeitungseinheit (120) zur Anpassung der Bearbeitung von Pflanzen mit von Sollwerten abweichenden Vitalitätsparametern und/oder von durch Schädlinge befallenen Pflanzen ansteuerbar ist.

2. Vorrichtung (100) nach Anspruch 1, wobei die Erkennungseinheit (110) eine zur kontinuierlichen Aufnahme von Bildern von Laub und/oder Früchten der zu bearbeitenden Pflanzen bei mehreren Wellenlängen eingerichtete Multispektralkamera (112) umfasst, welche außerdem dazu eingerichtet ist, die aufgenommenen Bilder einer der Erkennungseinheit (110) zugeordneten Analyseeinheit (114) zur Erkennung von Vitalitätsparametern und/oder von Schädlingsbefall zuzuführen.

3. Vorrichtung (100) nach Anspruch 1 oder 2, wobei der Steuereinheit (130) außerdem Informationen über die Fahrgeschwindigkeit (V) eines die Vorrichtung (100) tragenden Fahrzeugs zugeführt sind.

4. Vorrichtung (100) nach einem oder mehreren der Ansprüche 1 bis 3, außerdem umfassend eine Lokalisierungseinheit (140) zur Bestimmung einer absoluten Geoposition und/oder einer relativen Position innerhalb eines die zu bearbeitenden Pflanzen enthaltenden Bereichs oder Areals.

5. Vorrichtung (100) nach einem oder mehreren der Ansprüche 1 bis 4, außerdem umfassend eine Markierungseinheit (150), welche dazu eingerichtet ist, eine Pflanze mit von Sollwerten abweichenden Vitalitätsparametern und/oder eine durch Schädlinge befallene Pflanze optisch erkennbar vor Ort und/oder virtuell auf einer Karte mit Geoinformationen zu markieren um gezielte Maßnahmen zu einem späteren günstigeren Zeitpunkt zu ermöglichen.

6. Vorrichtung (100) nach einem oder mehreren der Ansprüche 1 bis 5, wobei die Bearbeitungseinheit (120) mittels Aktuatoren in Bezug auf die Pflanze positionierbar ist, und wobei die Anpassung der Bearbeitung in Übereinstimmung mit von der Steuereinheit (130) ausgegebenen Steuersignalen (S) umfasst
(i) das Distanzieren der Bearbeitungseinheit (120) von einer Pflanze mit von Sollwerten abweichenden Vitalitätsparametern und/oder von einer von Schädlingen befallenen Pflanze und/oder
(ii) das Abschalten der Bearbeitungseinheit (120), wenn eine Pflanze mit von Sollwerten abweichenden Vitalitätsparametern und/oder eine von Schädlingen befallenen Pflanze in einen Wirkungsbereich der Bearbeitungseinheit (120) kommt.

7. Vorrichtung (100) nach einem oder mehreren der Ansprüche 1 bis 6, außerdem umfassend eine Behandlungseinheit (150), die dazu eingerichtet ist, einer Pflanze mit von Sollwerten abweichenden Vitalitätsparametern Nährstoffe zuzuführen und/oder eines von mehreren oder mehrere Schädlingsbekämpfungsmittel und/oder biologische Maßnahmen auf eine durch Schädlinge befallene Pflanze auszubringen oder zu ergreifen.

8. Verfahren (200) zur vorbeifahrenden Bearbeitung von Pflanzen mittels einer Vorrichtung (100) nach einem oder mehreren der Ansprüche 1 bis 7 umfassend:
- Vorbeibewegen (210) der Vorrichtung (100) an einer oder mehreren Pflanzen,
- Erfassen (220) einer jeweils an einer Erkennungseinheit (110) vorbeiziehenden Pflanze,
- Erkennen (230) von von Sollwerten abweichenden Vitalitätsparametern und/oder von Schädlingsbefall an der jeweiligen Pflanze,
- Ausgeben (240) von Steuersignalen (S) an eine Bearbeitungseinheit (120), um die Bearbeitung der Pflanze durch diese an von Sollwerten abweichende Vitalitätsparameter und/oder Schädlingsbefall anzupassen.

9. Verfahren (200) nach Anspruch 8, wobei das Erkennen (230) umfasst:
- Zuführen (232) von mittels einer Multispektralkamera (112) der Erkennungseinheit (110) aufgenommenen Bildern zu einer Analyseeinheit (114).

10. Verfahren (200) nach Anspruch 8 oder 9, außerdem umfassend:
- Bestimmen (250) einer absoluten Geoposition und/oder einer relativen Position innerhalb eines die zu bearbeitenden Pflanzen enthaltenden Bereichs oder Areals.

11. Verfahren (200) nach einem oder mehreren der Ansprüche 8 bis 10, außerdem umfassend:
- Markieren (260), optisch erkennbar vor Ort und/oder virtuell auf einer Karte mit Geoinformationen, einer Pflanze mit von Sollwerten abweichenden Vitalitätsparametern und/oder einer durch Schädlinge befallene Pflanze.

12. Verfahren (200) nach einem oder mehreren der Ansprüche 8 bis 11, wobei das Anpassen der Bearbeitung von durch Schädlinge befallenen Pflanzen das Aussetzen der Bearbeitung befallener Pflanzen umfasst.
